(19) Europäisches Patentamt
European Patent Office
Office européen des brevets

(11) **EP 2 463 027 A1**

(12) # EUROPEAN PATENT APPLICATION

(43) Date of publication:
**13.06.2012 Bulletin 2012/24**

(51) Int Cl.:
**B01J 35/06** (2006.01)  **B01J 23/75** (2006.01)
**B01J 37/00** (2006.01)  **B01J 37/02** (2006.01)
**C04B 20/10** (2006.01)  **C04B 30/00** (2006.01)

(21) Application number: **10194094.8**

(22) Date of filing: **08.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Shell Internationale Research Maatschappij B.V.**
**2596 HR The Hague (NL)**

(72) Inventor: **The designation of the inventor has not yet been filed**

(54) **Method for the manufacture of a coated fibrous structure and a catalyst therefrom**

(57) The present invention relates to a method for the manufacture of a coated fibrous structure (100), suitable for use as a catalyst support. The method of the present invention comprises at least the steps of: providing a mass of fibres from a fibre supply dispenser (10, 110); separating the mass of fibres into separate fibres (40); collecting a plurality of the separate fibres (40) in a mould (50, 150) to provide an aggregate comprising the fibres, said mould (50, 150) comprising a liquid permeable base (52, 152); contacting at least a part of the aggregate in the mould (50, 150) with a mixture from a mixture supply system (70, 170), said mixture comprising (i) liquid and (ii) carrier material or a precursor of said carrier material to provide a wetted aggregate; and removing liquid from the wetted aggregate through the liquid permeable base (52, 152) of the mould (50, 150) to provide a coated fibrous structure (100) comprising the fibres and the carrier material or the precursor of said carrier material deposited thereon. The coated fibrous structure prepared by said method is suitable for manufacturing catalysts for a number of different reactions including a Fischer-Tropsch reaction.

*Fig. 1*

EP 2 463 027 A1

**Description**

This invention relates to a method for the manufacture, such as the automated manufacture, of a coated fibrous structure, suitable for use as a catalyst support. The coated fibrous structure prepared by said method is suitable for manufacturing catalysts for a number of different reactions including a Fischer-Tropsch reaction.

Many catalytic reactions are mass transfer-limited. For these reactions it is important that the reaction components have easy access to the catalytic sites, and that the reaction products can easily be removed from the catalytic sites. For these types of reactions catalyst accessibility is of prime importance.

One such example of mass transfer-limited catalytic reactions are the Fischer-Tropsch processes. These are often used for the conversion of gaseous hydrocarbon feed stocks into liquid and/or solid hydrocarbons. The feed stock, e.g. natural gas, associated gas, coal-bed methane, residual (crude) oil fractions, coal and/or biomass is converted in a first step to a mixture of hydrogen and carbon monoxide, also known as synthesis gas or syngas. The synthesis gas is then converted in a second step over a suitable catalyst at elevated temperature and pressure into paraffinic compounds ranging from methane to high molecular weight molecules comprising up to 200 carbon atoms, or, under particular circumstances, more.

Numerous types of reactor systems have been developed for carrying out the Fischer-Tropsch reaction. Fischer-Tropsch reactor systems include fixed bed reactors, in particular multi-tubular fixed bed reactors, fluidized bed reactors, such as entrained fluidized bed reactors and fixed fluidized bed reactors, and slurry bed reactors, such as three-phase slurry bubble columns and ebullated bed reactors.

The Fischer-Tropsch reaction is very exothermic and temperature sensitive with the result that careful temperature control is required to maintain optimum operation conditions and desired hydrocarbon product selectivity. Bearing in mind the very high heat of reaction which characterizes the Fischer-Tropsch reaction, the heat transfer characteristics of a catalyst are important.

Fisher-Tropsch catalysts have been used based on porous substrates. W02006/037776 describes the use of woven or non-woven metal structures in the shape of blankets, and porous catalyst elements based on gauze, sponge, foam, foil constructs, mesh, or webbing material.

It has been found that the wire structures used as catalyst substrate known in the art often have insufficient strength. Further, they are difficult to obtain in different shapes, and depending on the nature of the material, they may be quite costly. For example, a substrate based on drawn wires is quite expensive due to the high cost of the starting material.

There is therefore a need for a method for manufacturing a structure for use as a catalyst substrate which allows the use of relatively inexpensive starting materials, which allows manufacturing substrates in different shapes, and which provides catalyst substrates with good strength and porosity characteristics to aid mass transfer. In addition, for industrial applications, structures for use as catalyst substrates may be required in high production volumes, such that a high output manufacturing process is desirable. The present invention seeks to address these problems.

According to a first aspect, there is provided a method for the manufacture of a coated fibrous structure comprising at least the steps of:

- providing a mass of fibres from a fibre supply dispenser;
- separating the mass of fibres into separate fibres;
- collecting a plurality of the separate fibres in a mould to provide an aggregate comprising the fibres, said mould comprising a liquid permeable base;
- contacting at least a part of the aggregate in the mould with a mixture from a mixture supply system, said mixture comprising (i) liquid and (ii) carrier material or a precursor of said carrier material to provide a wetted aggregate; and
- removing liquid from the wetted aggregate through the liquid permeable base of the mould to provide a coated fibrous structure comprising the fibres and the carrier material or the precursor of said carrier material deposited thereon.

The present invention also provides an apparatus for the manufacture of a coated fibrous structure. The apparatus comprises a fibre supply dispenser for providing a mass of fibres; a separator for separating the mass of fibres into separate fibres; a mould comprising a liquid permeable base for collecting a plurality of the separate fibres to form an aggregate; a mixture supply system for contacting at least a part of the aggregate in the mould with a mixture comprising (i) liquid and (ii) a carrier material or a precursor of said carrier material to provide a wetted aggregate; and liquid removal means for removing liquid from the wetted aggregate to provide a coated fibrous structure.

In another aspect, a coated fibrous structure prepared according to the method disclosed herein is provided.

In a further aspect, the coated fibrous structure prepared according to the method disclosed herein may be a catalyst substrate, or catalyst. Thus, a method of providing a catalyst substrate or catalyst comprising the method disclosed herein is also provided.

In a still further aspect, the coated fibrous structure prepared according to the method disclosed herein may be heated to provide a heat-treated fibrous structure. Such a heat-treated fibrous structure may also be used as a catalyst substrate, or catalyst.

In a further aspect the coated fibrous structure or heat-treated fibrous structure prepared according to the method disclosed herein may comprise a catalytically active material, such as a metal, or a precursor thereof, such that a catalyst or catalyst precursor is provided.

In another aspect, the use of a catalyst prepared according to the method disclosed herein as a Fischer-Tropsch catalyst is provided.

In a further aspect, disclosed herein is a Fischer-Tropsch process comprising at least the steps of:

- providing a Fischer-Tropsch reactor with a catalyst prepared according to the method disclosed herein, said catalyst comprising a coated fibrous aggregate and a catalytically active metal or a precursor thereof;
- supplying syngas to the catalyst in the reactor; and
- removing Fischer-Tropsch product from the reactor.

Embodiments of the present invention will now be described by way of example only and with reference to the accompanying non-limited drawings in which:

Figure 1 is a diagrammatic scheme of a method of, and apparatus for, the manufacture of a coated fibrous structure utilising an endless belt.

Figure 2 is a diagrammatic scheme of a method of, and apparatus for, the manufacture of a coated fibrous structure utilising robotic arms.

The method described herein and a coated fibrous structure obtained therefrom and its advantages will be described in more detail below, as will be further aspects of the invention.

The method disclosed herein may advantageously be an automated method for the manufacture of a coated fibrous structure. In the present context, the term 'automated' relates to a manufacturing method which uses control systems, such as numerical control, programmable logic control and/or other industrial control systems to operate machinery carrying out at least the providing, separating, collecting, contacting and removing steps discussed below, typically in a sequential, continuous manner. Each step can be operated by an electronic and/or mechanical system, typically controlled by a processing unit. The method may be entirely machine controlled and need not require the constant input and/or the continuous monitoring of a human operator.

The method comprises the step of collecting a plurality of fibres in a mould to form an aggregate comprising the fibres.

In collecting a plurality of fibres in the mould to form an aggregate, care should be taken of the following. The fibres supplied to the mould should be separate. In the present context, "separate fibres" means that the do not adhere to each other, or only to a limited extent. Otherwise, it will be difficult to effect proper process control.

If this is not done, contacting fibres adhered to each other with a mixture comprising a liquid and a carrier material or a precursor thereof will be difficult, which may result in inadequate density control.

It is also advisable that the fibres should not be oriented or aligned with one another in the same direction, or only to a limited extent. For instance, fibres may be provided from a manufacturer in aligned form in order to reduce the volume of the packaging. This alignment of fibres may reduce the fibre supply package volume by up to 50%, providing lower transport and storage costs. However, if such oriented or aligned fibres are provided directly to the mould, an inhomogeneous structure may be formed. This may result in a coated fibrous structure with a too high density and insufficient strength.

The nature of the fibres used herein may depend on the nature of the coated fibrous structure to be formed and any catalyst to be based upon it. Obviously, the fibres should be such that the structure will not disintegrate under the conditions in which the coated fibrous structure, such as a catalyst, will be used. Examples of suitable materials include ceramic fibres, rock wool, glass fibres, and fibres of metal or metal alloy. Fibres of metal or metal alloy may be preferred. In one embodiment, the fibres may comprise stainless steel, such as stainless steel AISI 310, AISI 316, or AISI 430. In other embodiments, the fibres comprise, for example, one or more of iron, copper, nickel, molybdenum, and aluminium. In one embodiment, the nature of the fibres is selected to contribute to the catalytic activity of the final catalyst. This and further properties of the fibres, such as their dimensions, will be elucidated in more detail below.

Suitable fibres may be provided as a mass of fibres from a fibre container. In the context of the present specification, a mass of fibres refers to a collection of fibres which have not been purposefully made to adhere to each other. The mass of fibres may be in their supplied state, e.g. as manufactured.

Due to one or both of the fibre adhesion and fibre alignment, the mass of fibres should be subjected to a separation step before it is collected in the mould. In particular, the mass of fibres are separated into a plurality of separate fibres before collection in the mould. The separation step may encompass, for example, deaggregating of the mass of fibres. The mass of fibres may be separated using a separator, such as one or both of steel brushes, and a vibrating sieve. In one embodiment a funnel or other similar device may be placed gravitationally below the separator, between the separator and an open side of the mould, to collect and channel the separate fibres into the mould. Other suitable methods will be evident to the skilled person.

In addition, undesirable orientation of the fibres in the mould can be mitigated by a number of measures. In the first place, the fibre length should be selected appropriately as the presence of too long fibres may favour orientation occurring. Further, the distance which the fibres have to travel when they are provided to the mould should not be too long. For instance, if the fibres are dropped from a fibre dispenser into the mould, a too high dropping length will favour orientation occurring. Further the density of the dropping fibres should be not too high, as a too high density will favour orientation of the fibres in the aggregate.

With the above guidelines the skilled person will be able to select a method of collecting a plurality of separate fibres in a mould to form an aggregate.

In a further aspect, the rate at which the fibres are provided to the mould can be adjusted. This variation of the throughput of the fibres can affect the density of the aggregate.

The separation step used to mitigate against fibre adhesion may be used to influence the density of the aggregate. For instance, if a mass of fibres is separated by passing them through a vibrating sieve, the rate at which the fibres are applied to the sieve, the frequency of vibration of the sieve and the width of the mesh making up the sieve can all affect the rate at which the fibres are collected in the mould to form the aggregate.

As discussed above, the plurality of separate fibres from the separation step are collected in a mould. The mould should comprise a liquid permeable base. In the context of the method described herein, the term "liquid permeable" means that the base should allow passage of the liquid present in the mixture used in the contacting step discussed below. It will be apparent that the liquid permeable base should be impermeable to the fibres forming the aggregate to prevent loss of fibres from the aggregate. The liquid permeable base of the mould may comprise a mesh, such as a wire mesh, more typically a metallic wire mesh.

The mesh may comprise a plurality of pores to allow passage of liquid. Each hole in the mesh may have a surface area of less than or equal to 4 mm$^2$ (e.g. dimensions of less than or equal to 2x2 mm for square pores), more particularly less than or equal to 1 mm$^2$ (e.g. dimensions of less than or equal to 1x1 mm for square pores), still more particularly less than or equal to 0.25 mm$^2$ (e.g. dimensions of less than or equal to 0.5x0.5 mm for square pores).

The mould may further comprise an open end through which the fibres are admitted, which is typically at the opposite end of the mould to the liquid permeable base. The mould may further comprise one or more sides, typically of a solid material, which are more typically liquid impermeable, and are connected to the liquid permeable base. An advantage of the method disclosed herein is that the size and shape of the mould can be selected to obtain a coated fibrous structure which is tailored to a specific use. For example, the size and shape of the mould can be selected so that a coated fibrous structure is formed which has a shape fitted to the unit in which it will be used. For example, when a catalyst is to be formed from the coated fibrous structure, it may be tailored to encompass spaces for heating or cooling pipes, or it may be tailored to take into account curvature of the reactor.

The size and shape of the mould may also be selected to form coated fibrous structures in the shape of mats or mattresses, spheres, cylinders, cubes, blocks, pyramids, donuts, or irregular shapes. For example, when the coated fibrous structure forms a catalyst, it can be used in fixed bed or moving bed applications. The use of cylinders may sometimes be preferred for reasons of processing efficiency.

The aggregate as it is formed in the mould may have the final shape for the coated fibrous structure as it will be used. It is apparent that such a method of manufacture will provide a non-woven aggregate, and consequently a non-woven coated fibrous structure.

In a further aspect of the method disclosed herein, the aggregate may be compressed after it is formed in the mould. The compression of the fibres making up the aggregate may be carried out in such a manner that the volume of the aggregate in compressed state is at most 90% of the volume of the aggregate before compression. More particularly, the volume of the aggregate in compressed state can be at most 70% of the volume of the aggregate before compression, still more particularly at most 50% and even more particularly at most 30%. In general, the volume of the aggregate in compressed state is at least 5% of the volume of the aggregate before compression, more particularly at least 10%, still more particularly at least 15%, even more particularly at least 30%.

Compression of the aggregate can be carried out by applying pressure onto the aggregate in the mould from one or more sides. It will be evident to the skilled person how this can be effected.

The degree of compression influences the final properties of the coated fibrous structure as follows. The higher the degree of compression, the more the compressed fibres will entangle. This will have a positive influence on the strength of the coated fibrous structure, such as a catalyst substrate. On the other hand, if the degree of compression becomes too high, this may detrimentally affect the porosity of the structure. Thus, the degree of compression will have to be selected in balance with the properties of the fibres. It is within the ability of the skilled person to select an appropriate

EP 2 463 027 A1

degree of compression.

For example, in one embodiment, the plurality of separate fibres are collected in the mould to form an aggregate. The aggregate is then compressed in the mould, e.g. by a suitable shaped die or in a double belt press, to provide an aggregate in a compressed state. For instance, the aggregate in a compressed state may be in the form of a cylinder, cuboid, sheet, mat or other form. If necessary, the resulting compressed sheet or mat can be cut into predetermined shapes.

The next step in the method described herein is contacting at least a part of the aggregate in the mould, which may optionally be in a compressed state, with a mixture comprising (i) liquid and (ii) carrier material or a precursor of said carrier material. It will be apparent that in certain embodiments the mixture may comprise one or both of:

- one or more liquids and
- one or more carrier materials or precursors of said carrier materials.

The mixture of liquid and carrier material or a precursor thereof can be supplied to the mould, for instance through an open end of the mould, from a mixture supply system, typically a dosing system. Such a dosing system may comprise a mixture tank for the mixture comprising liquid and carrier material in fluid connection with a metering device, which can supply a predetermined amount (by mass or volume) of mixture through a mixture supply system outlet to the aggregate in the mould. The mixture will have a predetermined proportion of liquid and carrier material or precursor thereof.

At least a part of the aggregate in the mould is contacted with the mixture comprising liquid and carrier material or the precursor thereof thereby wetting at least a part of the aggregate, such as all of the part contacted with the mixture. For instance, at least 50%, particularly at least 80%, even more particularly at least 95% of the aggregate is contacted with the mixture comprising the liquid and the carrier material or a precursor of said carrier material. It will be apparent that the proportion of the aggregate contacted with the mixture may be determined from the volume of free space in the mould (i.e. the internal volume of the mould not occupied by the aggregate) and the volume of mixture supplied by the mixture supply system.

The liquid permeable base allows passage of the mixture through the mould and aggregate therein. This fluid flow allows the mixture to penetrate the voids between the fibres, thoroughly wetting the aggregate. If the base of the mould were not permeable to the liquid in the mixture, air pockets may form between the fibres in the aggregate as the mould fills with mixture, especially near the base of the mould, lowering the area of contact between the fibres and the mixture. Providing a liquid permeable base therefore improves the contact between the mixture and aggregate.

It may be beneficial to use an excess volume of mixture i.e. above the amount necessary to apply the required amount of carrier material or a precursor thereof, in order to compensate for liquid passing directly through the base of the mould. Such liquid can be collected gravitationally below the base of the mould and recycled to the mixture supply system. For instance, at least a 10% excess (by volume) of mixture may be used, more particularly at least a 25% (by volume), still more preferably at least 50% (by volume).

The carrier material in the mixture may be an oxidic material, typically an oxide, such as one suitable for use in catalytic applications, whether as active component, as adhesive component, or as carrier component. Examples of suitable oxides, typically porous oxide, include silica, alumina, titania, zirconia, gallia, ceria, oxidic components such as molecular sieves, and oxides of the non-noble metals of Group VIII of the periodic table of elements (CAS Version), more in particular iron, cobalt, and nickel, oxides of metals of Group VIB of the periodic table of elements, more in particular chromium, molybdenum, and tungsten, and oxides of metals of Group VIIB of the periodic table of elements, more in particular manganese.

Precursors of the carrier material are those compounds which can be converted into the carrier material during a subsequent processing step. For instance, if the carrier material is an oxide, such as one suitable for use in catalytic applications, the precursor thereof may be a compound which can be converted into the desired oxide after removal of liquid, optionally with heating, for instance under calcination conditions, e.g., at a temperature of 300-1100 °C in the presence of oxygen. Examples of suitable precursors include salts and hydroxides. Suitable precursors will be discussed in more detail below. It will be apparent that carrier materials and their precursors may be used in all kinds of combinations.

To facilitate adhesion of carrier material such as an oxide, or the precursor thereof, the fibres can be one or both of cleaned and roughened before application of the carrier material e.g. oxide (or precursor) in the mixture, especially when the fibres comprise metal. This is preferably done before the fibres are converted into the aggregate.

The carrier material or precursor thereof may be applied to the aggregate in the form of a solution or dispersion in the liquid. Typically, a solution or dispersion in an aqueous medium is used. For instance, an alcoholic liquid medium or aqueous alcoholic liquid medium may be used. The liquid may be applied by pouring it onto at least a portion of the aggregate in the mould, for instance through an open end of the mould, from the mixture supply system.

As indicated above, suitable oxidic materials include the oxides known in the art as carrier material for catalysts, such as alumina, silica, titania, zirconia, gallia, ceria, and mixtures and combinations thereof such as silica-alumina, etc.

5

These oxides may further be indicated as carrier oxides, although the term should not be interpreted as limiting.

Suitable precursors for carrier materials such as carrier oxides are known in the art and include salts or (hydr) oxides. For example, a solution or dispersion may be used comprising one or more salts or (hydr)oxides of silicon, zirconium, gallium, caesium, titanium, or aluminium, e.g., aluminium trihydrate, aluminium monohydrate, silicilic acid, titanium lactate, or an ammonium salt of lactic acid titanate chelate, such as Tyzor® obtainable from DuPont.

The use of the combination of a first type of oxidic material in combination with a precursor for a second type of oxidic material is also envisaged. For example, a dispersion may be used comprising a particulate oxidic material, e.g., alumina, silica, titania, or silica-alumina, in combination with a precursor which acts as adhesive for the particulate oxidic material. Examples of precursors which are particularly suitable in this respect include acid-peptised aluminium trihydrate, silicic acid, and compounds like titanium lactate, and an ammonium salt of lactic acid titanate chelate, such as Tyzor® obtainable from DuPont.

Accordingly, in one embodiment of the contacting step the aggregate is provided with a precursor for a carrier oxide selected from alumina, silica, zirconia, titania, gallia, ceria, or a combination thereof. In another embodiment, the fibrous aggregate is provided with an oxide selected from alumina, silica, zirconia, titania, gallia, ceria, or a combination thereof.

Further oxides encompass catalytically active oxides, which for the purposes of the present method and coated fibrous structure are divided into catalytically active metal components and catalytically active particulate material such as molecular sieves, including zeolites.

In another aspect, further materials or precursors of said further materials may be coated onto the aggregate. The further material or its precursor may be incorporated as part of the mixture used in the contacting step, such that said mixture comprises (i) liquid, (ii) carrier material or a precursor of said carrier material and (iii) further material or a precursor of said further material.

The further material may be one or more of the catalytically active metals of Group VIII, Group VIB, Group VIIB or precursors thereof, or oxides selected from alumina, silica, zirconia, titania, gallia, ceria, and molecular sieves. Suitable precursors for further materials are known in the art and include salts or (hydr)oxides of the further materials.

In one embodiment, the further material may be catalytically active material, thereby forming a catalyst after at least removal of the liquid. Suitable catalytically active material may encompass catalytically active metal components, or other catalytically active materials such as molecular sieves, including zeolites.

Suitable catalytically active metal components include (components of) the noble and non-noble metals of Group VIII of the periodic table of elements (CAS Version), more in particular iron, cobalt, nickel, platinum and palladium, metals of Group VIB of the periodic table of elements, more in particular chromium, molybdenum, and tungsten, metals of Group VIIB of the periodic table of elements, more in particular manganese. Suitable molecular sieves for use in the method described herein encompass the molecular sieves known in the art of catalysis. Suitable molecular sieves include ZSM-5 and other ZSM-type sieves, and zeolites like zeolite beta, zeolite X, and zeolite Y. Combinations of various types of materials may also be used.

Catalytically active particulate materials such as molecular sieves may be applied to the aggregate as a further material present in the mixture of the contacting step. In a preferred embodiment a dispersion is used comprising a combination of a particulate molecular sieve and a precursor of a carrier material, such as an oxidic carrier. For example, a dispersion may be used comprising a particulate molecular sieve in combination with a carrier precursor which acts as adhesive for the particulate material. For examples of precursors particularly suitable as adhesives reference is made to what is stated above.

The various materials can be combined in different configurations. In one embodiment, the aggregate is provided with a precursor for a carrier oxide carrier material selected from alumina, silica, zirconia, titania, gallia, ceria, or a combination thereof, whether or not in combination with an oxide selected from alumina, silica, zirconia, titania, gallia, ceria, molecular sieves, or a combination thereof.

In another embodiment, a precursor for a carrier oxide carrier material selected from alumina, silica, zirconia, titania, gallia, ceria, or a combination thereof, is provided, whether or not in combination with an oxide or a precursor therefor of a non-noble metal of Group VIII, of a metal of Group VIB or a metal of Group VIIB.

Contacting at least a part of the aggregate with a mixture comprising (i) liquid and (ii) carrier material or a precursor of said carrier material (and any further material or precursor of said further material) provides a wetted aggregate.

The next step in the method described herein is the removal of liquid from the wetted aggregate to provide a coated fibrous structure. The coated fibrous structure comprises the fibres with the carrier material or the precursor of the carrier material, together with any optional further material or precursor of the further material, deposited on said fibres.

The liquid removal step removes a part, typically a substantial part, more typically at least 50 wt.%, still more typically at least 70 wt.%, most typically at least 90 wt.% of the liquid from the wetted aggregate.

As part of the liquid removal step, excess carrier material or a precursor of said carrier material and any optional further material or a precursor of said further material may also be removed i.e. the liquid removal step may encompass removal of excess mixture from the wetted aggregate.

In such a case, the base of the mould should be permeable to both the liquid and the carrier material or its precursor and any further material or its precursor. For instance, the carrier material (or a precursor thereof) and/or any further material or precursor thereof may be present in the mixture in solid phase, such as when the mixture is a slurry rather than solution. If the liquid permeable base is a mesh comprising a plurality of pores, the pores should be of a sufficient size to permit passage of the solid phase.

It may be desirable to remove excess mixture if this has gathered at the fibre intersections of the aggregate. In addition, some of the mixture may be removed from the wetted aggregate when the amount of mixture applied in a single contacting step is more than required such that an excess may result in subsequent problems, such as during a drying stage.

Liquid removal may be achieved by purging liquid and optionally associated carrier or further material or a precursor thereof through the liquid permeable base of the mould holding the wetted aggregate. The liquid permeable base may have an upper surface which is adjacent to the wetted aggregate and an opposing lower surface. The liquid removal may be achieved by liquid removal means, such as one or more blowers, jets and pumps. In one embodiment, the liquid removal step can be carried out by passing a gas, typically air or an inert gas such as nitrogen, through the wetted aggregate in the mould. The gas can be supplied by, for instance, an air blower or from one or more jets positioned above and directed toward the base of the mould, with the jets being in fluid communication with a compressor. Liquid (or mixture) from the wetted aggregate may become entrained in the gas passing through the wetted aggregate. The liquid (or mixture) carried by the gas can pass through the liquid permeable base of the mould and be removed.

Alternatively, a reduced pressure (versus the pressure on the upper surface of the liquid permeable base of the mould) may be generated at the lower surface of the liquid permeable base of the mould. Typically, the reduced pressure can be generated a vacuum pump. In this way, liquid and optionally carrier material or the precursor thereof and any optional further material or the precursor thereof may be sucked from the wetted aggregate through the liquid permeable base of the mould.

The liquid removal step may optionally further comprise subjecting the wetted aggregate to a drying step. In such a drying step, the wetted aggregate may be heated to remove liquid e.g. by evaporation. For instance, the wetted aggregate may be heated at a temperature of 100-200 °C. The optional drying step may be carried out for a period of 0.5-48 hours.

Such liquid removal processes are more advantageous than centrifuging to remove the liquid. Centrifuging would require the removal of the wetted aggregate from the mould. This could destabilise the arrangement of the fibres in the wetted aggregate, destroying its shape. In addition, utilising the liquid removal processes described herein allows the carrier material or a precursor thereof to be kept in a more even layer on the aggregate compared to centrifuging. Consequently, the contacting step may be repeated fewer times to obtain the desired amount of carrier material or precursor thereof on the fibres compared to a method using a centrifuging step. In this way, liquid can be removed from the wetted aggregate while still in the mould as part of a manufacturing method, especially an automated manufacturing method and a coated fibrous structure produced.

In the context of the present specification the word 'coated' should not be interpreted as requiring that the entire surface of all fibres is provided with the carrier material or a precursor thereof. This will be apparent because the contacting step requires only that a part (at least) of the aggregate be contacted with the mixture.

Removing liquid from the wetted aggregate may ensure sufficient cohesion between the fibres as a result of the deposited carrier material or precursor thereof to allow removal of the coated fibrous structure from the mould. In one aspect, such a coated fibrous structure can be used directly as a catalyst substrate or catalyst.

However, it may be desirable to subject the coated fibrous structure to a heating step, as this will improve the cohesion between the fibres. The heating step can provide a heat-treated fibrous structure. In the present context, the term 'heat-treated' is intended to represent a coated fibrous structure which has been heated, such as in a calcining or reducing operation. Such heat-treatment may harden the coating of the carrier material and/or convert a precursor of a carrier material to the carrier material.

The heating step may be carried out either before or after the coated fibrous structure is removed from the mould. The temperature of the heating step may be up to 1100 °C. The heating step may be a calcination operation. Suitable calcination conditions include a temperature of 200-900 °C, in particular 450-900 °C in air for a period of 0.5-10 hours.

If the heating step is carried out while the coated fibrous structure is still in the mould, the mould may be transferred to a suitable heating device, such as furnace, and the thus obtained heat-treated fibrous structure may then be removed from the mould. Alternatively, it is also possible to remove the coated fibrous structure from the mould, and subject it to a heating step after removal from the mould. The latter operation may be carried out for instance when a heating, and more particularly calcining operation, is to be carried out which exceeds the temperature limit of the mould. In a further aspect, the heat-treating step may be carried out in a reducing atmosphere. Heating under a reducing atmosphere may activate the coated fibrous structure as a catalyst. This may be carried out during manufacture or in situ for the intended use of the coated fibrous structure, for instance in a catalytic reactor.

In a further aspect, the steps of contacting at least a part of the aggregate with a mixture comprising (i) a liquid and (ii) a carrier material and a precursor thereof, and removing liquid (optionally with a drying operation) may be carried out more than once. In this way, multiple coating layers of carrier material or a precursor thereof (and optionally any further material or a precursor thereof) may be built up on the fibres. However, prior to carrying out any second or further contacting and liquid removal steps, an intervening heating step may be required in order to ensure the adhesion of the previously-applied coating before additional or further carrier material is applied.

For instance, the repetition of these steps allows the control of the thickness of the carrier material or precursor thereof deposited on the fibres, with each repetition providing a thicker coating. It will be apparent that it is advantageous to repeat these steps while the heat-treated fibrous structure remains in the mould, in order to better control the contacting of the heat-treated fibrous structure with the mixture comprising the liquid and carrier material or precursor thereof.

As will be clear to the skilled person, all kinds of other sequential coating treatments are possible, as long as an intermediate heating step is carried out to secure each coating layer.

In another aspect, further materials may be incorporated into the heat-treated coated fibrous structure. The further material may be chosen from those further materials which may be incorporated as part of the contacting step discussed above. The further material may be the same or different to any further material which may have been present in the mixture of the contacting step. The further material may be incorporated into the heat-treated fibrous structure i.e. after the heating of the coated fibrous structure, whether before of after removal from the mould.

The further material may be applied by contacting the heat-treated fibrous structure with a further mixture comprising (i) liquid and (ii) further material or a precursor of said further material (optionally in combination with (iii) further carrier material or a precursor thereof), to provide a wetted heat-treated fibrous structure. Any further carrier material may be chosen from those carrier materials which may be incorporated as part of the contacting step discussed above. The further carrier material may be the same or different to any further material present in the mixture of the contacting step.

The liquid used in the application of the further material may be chosen from those liquids discussed above as being present in the mixture contacted with the aggregate. The liquid may be the same as or different to the liquid in the mixture contacted with the aggregate.

In one aspect, the further mixture may be in the form of an aqueous solution or dispersion of the further material or a precursor of said further material, optionally in combination with carrier material or a precursor of said carrier material. The mixture can be supplied from a further mixture supply system, in an analogous manner to the contacting of at least part of the aggregate with a mixture from a mixture supply system.

The contacting with the mixture comprising the further material may be followed by subjecting the wetted heat-treated fibrous structure to a liquid removal step to provide a coated heat-treated fibrous structure comprising the fibres, carrier material or the precursor of said carrier material (from the previous contacting step(s)) and further material or the precursor of said further material (optionally in combination with any further carrier material or a precursor thereof). The coated heat-treated fibrous structure may then undergo an optional drying step and further heating step such as that discussed above for the heat-treated fibrous structure, such as calcination or reduction, for instance to convert a further material precursor into a catalytically active material.

The further material such as a catalytically active metal component will generally be applied in an aqueous solution or dispersion of a salt of a catalytically active metal component precursor, followed by removal of the liquid, e.g. the aqueous medium. The coated or heat-treated fibrous structure provided with the aqueous medium may then be subjected to a heating step which optionally, depending on the nature of the metal, may include a calcination and/or reduction step. The heating step, such as a calcination step, can be performed, for example, at a temperature of 300-700°C, at which the metal salt is converted to the metal oxide. A simultaneous or subsequent reduction step may convert the metal component to its metallic form.

As indicated above, the various components can be applied simultaneously, for example by combining a further material or precursor thereof, such as catalytically active materials or precursors, with the carrier material or precursor thereof when they are applied onto the fibres.

However, especially where a catalytically active metal component is used, it is sometimes preferred for reasons of process control, to first provide the aggregate with a carrier material such as an oxidic material, and then, after a heat-treatment, provide the heat-treated fibrous structure with the catalytically active metal component or precursor thereof, for example via impregnation. Impregnation may be achieved by contacting the heat-treated fibrous structure with a solution of the catalytically active metal component or a precursor thereof, such as an aqueous solution of a water soluble salt of the catalytically active metal. This allows the heat-treated fibrous structure to be wetted with the catalytically active metal component or its precursor and any pores, particularly those of the carrier material, to be filled with the solution. The solvent, such as water, can then be removed to deposit the catalytically active metal component or its precursor on the heat-treated fibrous structure, particularly on the carrier material, more particularly in the pores of the carrier material. If necessary, the heat-treated fibrous structure containing the deposited catalytically active metal component or precursor can then be further heat-treated, for instance by calcining or reduction, to convert the catalytically active metal component or precursor into its catalytically active form.

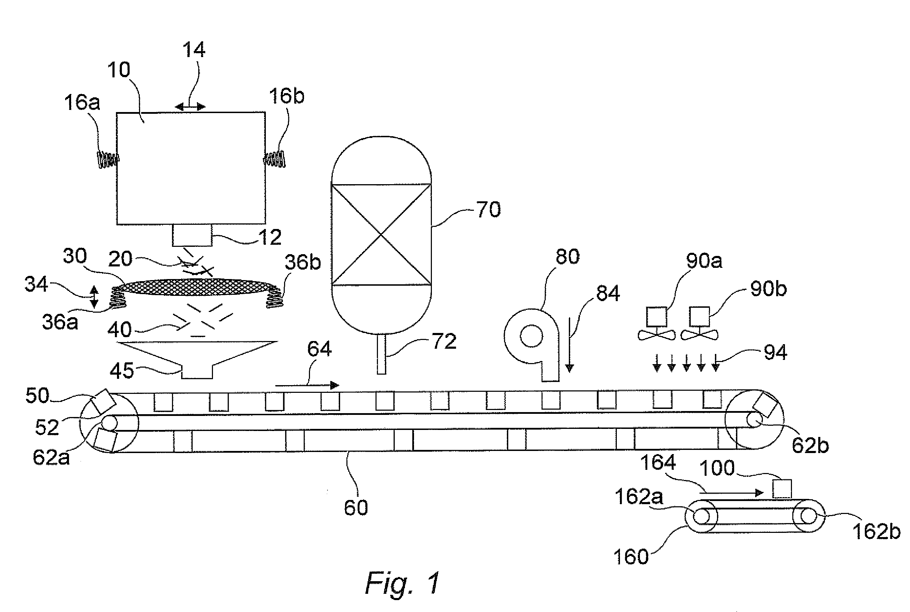

Referring to the drawings, Figure 1 shows one embodiment of the method described herein, more particularly an automated method. A fibre dispenser 10 is provided, filled with a mass of fibres (not shown). The mass of fibres 20 are supplied to the mould 50 through a dispenser outlet 12 of the fibre dispenser 10. In the embodiment shown in Figure 1, the fibre dispenser 10 and outlet 12 are placed gravitationally above a mould 50 to receive the fibres. Typically, the fibre dispenser 10 may be oscillated, for instance in a horizontal or vertical direction, in order to release the fibres. The arrows 14 show a horizontal direction of oscillation. In such an embodiment, the fibre dispenser may be secured by dispenser resilient means 16a, b such as springs or elastic fastenings.

Prior to reaching the mould 50, the mass of fibres 20 is passed through a sieve 30. The fibre dispenser may supply the mass of fibres 20 to the sieve 30 at a predetermined rate. The rate of supply of the fibres may be dependent upon the surface area of the dispenser outlet 12, the dimensions of the fibres and the frequency and amplitude of the oscillations of the fibre dispenser 10.

The sieve 30 may be vibrated to separate the mass of fibres 20 into separate fibres 40. This vibration may be independent of that of the fibre dispenser 10, or the sieve 30 may be attached to the fibre dispenser 10 and vibrated at the same rate. Numeral 34 shows the directions of the vertical oscillations of the sieve 30. In such an embodiment, the sieve may be secured by sieve resilient means 34a, b such as springs or elastic fastenings. A funnel 45 is placed gravitationally below the sieve 30, between the sieve 30 and mould 50. The separate fibres 40 falling from the sieve 30 are channelled into the mould 50 by the funnel 45, where they are collected to form an aggregate comprising the fibres. The mould 50 comprises a liquid permeable base 52. The liquid permeable base 52 may be a mesh comprising a plurality of pores which are sized to prevent passage of the separate fibres 40, while allowing passage of liquid, namely the liquid of the mixture discussed below.

It will be apparent to the skilled person that increasing the rate at which the mass of fibres 20 is applied to the sieve 30, increasing the speed of vibration of the sieve 30 and increasing the area of a sieve pore will all independently lead to an increase in the rate at which the separate fibres 40 are collected in the mould 50. This may lead to an increase in the mass (weight) of fibres forming the aggregate. In an analogous manner, decreasing the rate at which the mass of fibres 20 is applied to the sieve 30, decreasing the speed of vibration of the sieve 30 and decreasing the area of a sieve pore will all independently lead to a decrease in the rate at which the fibres are collected at any given point. This may lead to an decrease in the mass (weight) of fibres forming the aggregate in the mould 50.

In one embodiment, the mould 50 is present on a conveyor, such as an endless belt 60. Typically a plurality of moulds 50, such as at least 10, more typically at least 20, may be present on the conveyor. The endless belt 60 may be fabricated of a flexible material such as silicone rubber. A suitable endless belt 60 may comprise at least two pulleys 62a, b with the endless belt forming a continuous loop of material which rotates about the pulleys. At least one of the pulleys 62a, b should be powered to move the belt. The at least one pulley 62a, b which is powered may be powered by at least one motor, such as an electric motor.

Altering the speed of movement of the endless belt 60 may also be used to effect the formation of the aggregate. By decreasing the speed of the endless belt 60, the mass (weight) of the aggregate collected in the mould can be increased. Similarly, by increasing the speed of the endless belt, the mass (weight) of the aggregate collected can be decreased. In one embodiment, the speed of movement of endless belt 60 can be reduced, in some cases to 0, when a mould 50 is brought into alignment with the outlet of funnel 45 so that a predetermined quantity of separate fibres 40 can be collected in the mould 50. It will be apparent that the additional equipment discussed below, such as the mixture supply system 70, gas blower 80 and heating fans 90a, b, may be situated so that they are each in alignment with a mould 50 when one mould is in alignment with the outlet of funnel 45. Consequently, reducing the speed of or stopping the endless belt 60 will allow each piece of equipment to operate on a particular mould on the belt at the same time.

Once a plurality of the separate fibres 40 are collected as an aggregate in mould 50, the mould containing the fibres is then conveyed to a mixture supply system 70. Numeral 64 shows the direction of movement of mould 50 on the endless belt 60. The mixture supply system 70 may be a dosing system comprising a supply of a mixture comprising liquid and carrier material to be contacted with the aggregate, and can be stored in a mixture tank (not shown). The mixture tank is in fluid connection with a metering device, which can supply a predetermined amount (by mass or volume) of mixture to the aggregate in the mould 50. The mixture is delivered to the mould 50, for instance from the metering device, via a mixture supply system outlet 72, which can be positioned gravitationally above an open upper end of the mould 50. Depending upon the quantity of mixture supplied to the mould 50 from mixture supply system 70, all or only a part of the aggregate may be contacted with the mixture. It will be apparent that the degree of contacting may depend upon the volume of free space present in the mould (i.e. the total internal volume of the mould minus the total volume of the aggregate) and the volume of mixture added.

The mixture may be added to an open upper end of mould 50 so that it will flow through the mould, contacting the aggregate of fibres as it is drawn by gravity towards the liquid permeable base 52 of the mould. Liquid not retained by the aggregate may exit the mould 50 through the liquid permeable base 52.

Carrier material or a precursor thereof present with the liquid may also pass through the base of the mould if this is also permeable to the carrier material or its precursor. This can occur if, for instance, the carrier material or its precursor is in solution dissolved in the liquid, or if the carrier material or its precursor is in particulate form suspended in the liquid and the liquid permeable base 52 comprises pores of sufficient size to allow passage of the particulate form carrier material or precursor thereof.

The liquid and/or carrier material or a precursor thereof passing though the base 52 of the mould 50 may be collected as spent liquid at a point gravitationally below the liquid permeable base 52 of the mould 50. The spent liquid may then be recycled to the mixture supply system 70, optionally with the addition of fresh carrier material to provide the required carrier concentration in the mixture.

Once the aggregate in the mould 50 has been contacted with the mixture, the mould can be conveyed on endless belt 60 to a subsequent processing stage where liquid is removed from the wetted aggregate. In one embodiment, the liquid may be removed by directing one or more gas blowers 80, such as air blowers, at the aggregate in the mould 50. Numeral 84 shows the direction of the gas stream from the gas blower 80.

One or more gas streams, such as air streams, from the gas blowers 80, which are typically provided gravitationally above the mould 50, may enter the open end of the mould 50, and pass through the wetted aggregate, thereby entraining liquid and optionally carrier material or a precursor thereof from the mixture wetting the aggregate. The liquid entrained in the gas stream passes through the liquid permeable base 52, such as a mesh, of the mould 50. Carrier material or its precursor may also pass through the liquid permeable base 52 of the mould 50 as discussed above. Typically, this liquid and optionally carrier material or a precursor thereof can be collected as spent liquid and recycled to the dosing system 70, as discussed for the contacting step.

As part of the step of liquid removal from the wetted aggregate, the wetted aggregate in the mould may also be dried. In the embodiment shown in Figure 1, the endless belt 60 conveys the mould and wetted aggregate to one or more heaters, such as heating fans 90a, b. The one or more heaters can heat the wetted aggregate to remove any remaining liquid, for instance by evaporation, to provide a coated fibrous structure 100 comprising the fibres and the carrier material or the precursor of the carrier material deposited thereon.

Figure 1 shows the inversion of the mould 50 after the drying step as the endless belt 60 passes around pulley 62b. The turning upside down of the mould 50 releases the coated fibrous structure 100 from the mould. The coated fibrous structure 100 falls onto a second conveyor, such as second endless belt 160 which comprises at least two second pulleys 162a, b with the second endless belt forming a continuous loop of material which rotates about the second pulleys. The second endless belt can convey the coated fibrous structure 100 in a direction shown by arrow 164 to an optional heating stage, for instance a furnace or belt calciner, in which the coated fibrous structure is heated, typically calcined, to provide a heat-treated fibrous structure.

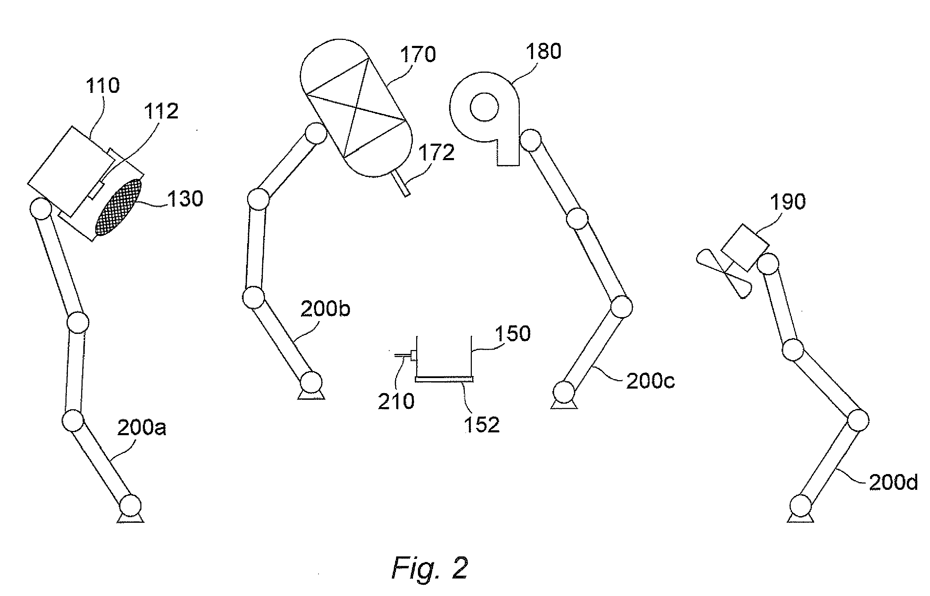

A further embodiment is shown in Figure 2. In this embodiment, a mould 150 comprising a liquid permeable base 152 is held stationary by securing means 210, such as a clamp, while the fibre container 110 comprising a fibre outlet 112 and sieve 130 attached below the fibre outlet 112, mixture supply system such as dosing system 170 comprising mixture supply system outlet 172, gas blower 180 and heating fan 190 are held on one or more robotic arms 200a, b, c, d. The robotic arms operate to bring the relevant equipment 110, 170, 180, 190 into alignment with an open side of the mould 150 such that each stage of the method can be carried out as described above.

The method described herein provides a coated fibrous structure. As compared to the gauze structures known in the art, the coated fibrous structures disclosed herein are characterised by a number of features. In the first place, the fibres of the coated fibrous structures are non-woven. Further, the fibres have a limited length, a specific diameter, and specific aspect ratio. Additionally, the fibres of the coated fibrous structures are adhered to each other via a carrier material, such as an oxidic component, or a precursor of the carrier material.

The fibres present in the coated fibrous structure have an average length in the range of 3-50 mm. If the average length of the fibres is below 3 mm, the strength of the structure will be detrimentally affected. If the average length of the fibres is above 50 mm, it will become more difficult to prepare a system with an appropriate structure. In one embodiment, the fibres have an average length of at least 4 mm, more in particular at least 6 mm. In one embodiment, the fibres have an average length of at most 20 mm, more in particular at most 15 mm.

The fibre length is the shortest distance between the two terminal ends of the fibre (as opposed to the length of the fibre from one end to the other along the length of the fibre body). The fibre length can be determined visually, where necessary with a microscope or other magnifying apparatus, or using measuring apparatus known in the art, such as a slide calliper. The average fibre length is calculated from the length of a random sample of 100 fibres.

As the presence of small fibres may detrimentally affect the properties of the coated fibrous structure, particularly when used as a catalyst substrate, it may be preferred for less than 10%, determined by number, of the fibres in the structure to have a length below 3 mm. More in particular it may be preferred for less than 5%, determined by number, of the fibres in the structure to have a length below 3 mm, or even less than 2%.

In one embodiment, the difference in length between the fibres is relatively small. This is because this will ensure a more homogeneous structure. Therefore, in one embodiment at least 50% by number of the fibres have a length within 20% of the average fibre length. More in particular, at least 70% by number of the fibres have a length within 20% of the average fibre length, or at least 80%, or even at least 90%.

The fibres have an average diameter in the range of 5-300 microns. If the average diameter is too low, the strength of the coated fibrous structure will be detrimentally affected. On the other hand, above a certain value increase of the diameter will not contribute to the properties of the coated fibrous structure, but will continue to the weight and the costs. The average diameter is calculated from the average length, determined as described above, and the density of the material from which the fibres are prepared, assuming that the fibres have a cylindrical shape.

In one embodiment, the average diameter of the fibres is at least 20 microns, more in particular at least 25 microns, still more in particular at least 50 microns. In one embodiment, the average diameter of the fibres is at most 200 microns, more in particular at most 150 microns.

The fibres have a length over diameter ratio in the range of 50-500. This value, which will also be indicated as the aspect ratio, is defined as the average length, as defined above, divided by the average diameter, as defined above. If the aspect ratio is too low, the strength of the coated fibrous structure may be insufficient, particularly for use as a catalyst substrate. If the aspect ratio if too high, the strength of the coated fibrous structure will also be insufficient. In one embodiment, the fibres have an aspect ratio of at least 75, more in particular at least 100. In one embodiment, the fibres have an aspect ratio of at most 350, more in particular at most 300.

In one embodiment, the coated fibrous structure comprises one or more of catalytically active metal components of Group VIII, Group VIB, Group VIIB or precursors therefor, and oxides selected from alumina, silica, zirconia, titania, gallia, ceria, molecular sieves, and precursors therefor. In particular, the coated fibrous structure comprises one or more of catalytically active metals of Group VIII, Group VIB, Group VIIB or precursors therefor. The coated fibrous structures disclosed herein can suitably be prepared by the methods described above.

The coated fibrous structure preferably comprises, as the carrier material, one or more oxides selected from alumina, silica, zirconia, titania, gallia, ceria, and molecular sieves, whether or not in combination with one or more of catalytically active metal components of Group VIII, Group VIB, Group VIIB.

The amount of material present on the coated fibrous structure may vary within broad ranges. In general, the carrier material and any catalytic component makes up at least 0.5 vol.% of the coated fibrous structure, optionally after additional heating to provide a heat-treated fibrous structure. As an upper level, a value of at most 40 vol.% may be mentioned. More in particular, it may make up between 1 and 20 vol.% of the coated fibrous structure, still more in particular between 5 and 15 vol.%. The volume of the coated fibrous structure is the outer volume.

In one embodiment, the coated fibrous structure may comprise 1-20 vol.% of fibres, in particular 1-10 vol.%, more in particular 3-8 vol.%. Here, the fibres referred to are the fibres from which the aggregate was prepared, excluding the carrier material such as an oxide which keeps them together.

The coated fibrous structure disclosed herein can have a very high void fraction. In one embodiment, the void fraction is at least 60%, more in particular at least 70%, still more in particular at least 80%, even more in particular at least 85%, most in particular at least 90%. In one embodiment, the structure has a void fraction in the range of 92-97%. An upper limit for the void fraction of 99% may be mentioned. The void fraction is determined from the density of the coated fibrous structure as compared to the density of the material from which the fibres are prepared using the following formula:

```
void fraction = [1 - (substr. density/mater. density)]*100%
```

The use of fibres with the specified properties provides coated fibrous structures which can have a very large geometric surface area. This makes the structures very suitable for use in catalytic processes where the reaction rate is limited by mass transfer.

In one embodiment, the geometric surface area of the coated fibrous structures disclosed herein, optionally after heat treatment to provide a heat-treated fibrous structure, is at least 500 $m^2/m^3$, more in particular at least 1000 $m^2/m^3$. The upper limit of the geometric surface area is not critical. Values up to 8000 $m^2/m^3$ and more may be obtained.

In one embodiment, the coated fibrous structure comprises a core and an outer layer. The outer layer is adjacent to the perimeter of the volume occupied by the coated fibrous structure. The fibre density of the outer layer may be higher than the fibre density of the core. It has been found that a coated fibrous structure with these features combines a high void fraction with high strength and in particular high attrition resistance. These properties are desirable for a catalyst substrate. The outer layer is the layer which, on the basis of the cross-section of the structure, makes up the outer 25% of the structure. In this embodiment, the fibre density of the outer layer is at least 10% higher than the fibre density of the core.

The coated fibrous structure, optionally after heating to provide a heat-treated fibrous structure, generally has a size of at least 0.5 $cm^3$. The maximum size of the coated fibrous structure is not critical, and will depend on the application, for instance as a catalyst, and on considerations like ease of handling, size and shape of the unit, etc. As a maximum value a size of 5 $m^3$ may be mentioned.

In one embodiment, the coated fibrous structure has a volume in the range of 0.5-200 $cm^3$. Structures within this volume range may be used as catalyst substrates, for example in the manufacturing of fixed bed or moving bed catalyst particles.

In another embodiment, the coated fibrous structure has a volume in the range of 200 $cm^3$ to 5 $m^3$. For coated fibrous structures forming shaped reactor filling substrates, a volume range of 0.05-5 $m^3$ may be mentioned.

In one embodiment, the fibres have a relatively rough surface structure, e.g., on the microscopic scale. This makes for improved adhesion of a catalytic component to the fibres. The surface roughness, expressed in percent, is the measured circumference of the fibre divided by the calculated circumference of the fibre, wherein the calculated circumference is n * the average diameter of the fibres.

The circumference of the fibre may be determined, for example, using an optical method. The fibres are embedded in a resin and coupes are prepared therefrom over the cross-section of the fibres. The circumference of the fibre may then be determined using conventional microscopical methods, e.g., line measurement by hand or via appropriate software. To increase the accuracy of the method it is recommended to measure the circumference of a number of fibre cross-sections, e.g., 10, 20, or 50, and to calculate the average measured circumference therefrom.

In one embodiment disclosed herein, the surface roughness is at least 105%. It may be preferred for the surface roughness to be at least 110%. In some embodiments, the surface roughness may be at least 115%, or even at least 120%. While the upper limit of the surface roughness is not critical, a value of at most 200% may be mentioned as a general value.

In one embodiment, the fibres are rapidly solidified metal fibres. It has been found that these fibres combine a suitable surface roughness with suitable length, diameter, and aspect ratio requirements. Rapidly solidified metal fibres are known in the art. They are produced for example via a process in which a rotating wheel is brought into contact with liquid metal, for example by plunging it into a pool of molten metal or contacting it with the molten tip of a metal rod. The wheel is wetted by the liquid metal. The fibres separate from the wheel through centrifugal forces. Methods for manufacturing metal fibres through rapid solidification processes are known in the art. They are for example described in US 5,027,886, DE 19711764, and DE 10000097. The rapid solidification process can take place in an inert gas environment, e.g. in nitrogen, or in a noninert environment, e.g., in air. Suitable rapidly solidified metal fibres can be obtained commercially from, int. al., Fraunhofer and Fibretech.

The catalyst described herein formed from the coated fibrous structure is especially suitable for use in diffusion-limited reactions most especially the Fischer-Tropsch reaction, but also hydrocracking, oxidative desulphurisation, denox, flameless combustion, alkylation, and hydrotreating, including hydrogenation, hydrodesulphurisation, hydrodentitrogenation, hydrodemetallistaion, and hydrodearomatisation.

Catalysts for use in the Fischer-Tropsch synthesis may comprise the coated fibrous structure and one or more metals from Group VIII of the Periodic Table, especially from the cobalt and iron groups, optionally in combination with one or more metal oxides and/or metals as promoters selected from zirconium, titanium, chromium, vanadium and manganese, especially manganese and optionally one or more metals as promoters selected from zirconium, titanium, chromium, vanadium and manganese. A Fischer-Tropsch catalytically active metal or precursor may include a metal such as cobalt, iron, nickel and ruthenium, more preferably cobalt. The catalytically active metal may be present in the catalyst together with one or more metal promoters or co-catalysts. The promoters may be present as metals or as the metal oxide, depending upon the particular promoter concerned. Suitable promoters include oxides of metals from Groups IA, IB, IVB, VB, VIB and/or VIIB of the Periodic Table, oxides of the lanthanides and/or the actinides. More particularly, the catalyst comprises at least one of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. Particular metal promoters include rhenium, platinum and palladium. A most suitable catalyst comprises cobalt as the catalytically active metal and zirconium as a promoter. Another most suitable catalyst comprises cobalt as the catalytically active metal and manganese and/or vanadium as a promoter.

Catalysts suitable for use in hydrocracking often comprise as catalytically active metal or precursor one or more metals selected from Groups VIB and VIII of the Periodic Table of Elements as well as carrier material. More particularly, the hydrocracking catalysts contain one or more noble metals from Group VIII. Still more particularly, the noble metals are platinum, palladium, rhodium, ruthenium, iridium and osmium. Most particularly, catalysts for use in the hydrocracking stage are those comprising platinum. The hydrocracking catalyst is also provided with alumina, silica, silica-alumina, or titania as carrier material. A hydrocracking catalyst may combine a catalytically active metal as described above with a molecular sieve, for example a zeolite, for a particular example a Y zeolite.

For alkylation the catalyst may, for example contain as catalytically active material a molecular sieve, which is also a carrier material, for example one or more of zeolite Y, zeolite beta, or ZSM-5, optionally in combination with an active metal component.

For hydrotreating of hydrocarbon feeds, encompassing one or more of hydrogenation, hydrodesulphurisation, hydrodenitrogenation, hydrodemetallisation, or hydrodearomatisation, a suitable catalyst may encompass an oxidic carrier as carrier material, for example comprising silica, alumina, titania, or combinations thereof, in particular alumina, in combination with an active metal component comprising a combination of a Group VIB metal component, in particular molybdenum and/or tungsten, more in particular molybdenum, with a Group VIII non-noble metal component, in particular cobalt and/or nickel.

For denox a suitable catalyst may comprise vanadium a catalytically active material and titania as carrier material.

In one embodiment, the material of the fibres acts as catalytically active material. For example, for flameless combustion a catalyst may be prepared comprising titania as carrier material on an aggregate comprising copper fibres. In this case the copper fibres act as catalytically active material.

In a further aspect, a catalyst comprising a coated or heat-treated fibrous structure described above may be used in catalysing a diffusion limited reaction. The diffusion-limited reaction may for example be selected from the Fischer-Tropsch reaction, hydrocracking, oxidative desulphurisation, denox, flameless combustion, and alkylation. It is considered particularly suitable for catalysing Fischer-Tropsch reactions.

In another aspect, a process for performing a diffusion limited reaction wherein a feedstock is contacted under reaction conditions with a catalyst comprising a coated or heat-treated fibrous structure as described above is provided.

In a still further aspect, a process for the production of liquid hydrocarbons which comprises providing a feed comprising C0 and H2 to a reactor comprising a Fischer-Tropsch catalyst, the reactor being at reaction temperature and pressure, and withdrawing an effluent from the reactor, the catalyst comprising one or more metals from Group VIII of the Periodic Table metal of Elements, and a coated fibrous structure as described above, is provided.

The reactor used in the Fischer-Tropsch process described herein may be an immobilised slurry reactor, an ebullating bed reactor or a multitubular fixed bed reactor, preferably an immobilised slurry reactor.

The Fischer-Tropsch reaction may be carried out at a temperature in the range from 125 to 400 °C, in particular 175 to 300°C, more particularly 200 to 260 °C. The gaseous hourly space velocity may vary within wide ranges and is typically in the range from 500 to 10000 N1/1/h, more typically in the range from 1500 to 4000 Nl/l/h. The hydrogen to CO ratio of the feed as it is fed to the catalyst bed generally is in the range of 0.5:1 to 2:1.

In one embodiment the feed is provided to the reactor in the form of a mixture of hydrogen and CO, for example in the form of a syngas feed. In another embodiment, the hydrogen and CO are provided to the reactor in different streams.

Products of the Fischer-Tropsch synthesis may range from methane to heavy hydrocarbons. For instance, the production of methane is minimised and a substantial portion of the hydrocarbons produced have a carbon chain length of a least 5 carbon atoms. In particular, the amount of C5+ hydrocarbons may be at least 60% by weight of the total product, more particularly, at least 70% by weight, even more particularly, at least 80% by weight, most particularly at least 85% by weight. The CO conversion of the overall process may be at least 50%.

The products obtained via the process described herein can be processed through hydrocarbon conversion and separation processes known in the art to obtain specific hydrocarbon fractions. Suitable processes are for instance hydrocracking, hydroisomerisation, hydrogenation and catalytic dewaxing. Specific hydrocarbon fractions are for instance LPG, naphtha, detergent feedstock, solvents, drilling fluids, kerosene, gasoil, base oil and waxes.

In one embodiment it may be preferred to treat the catalyst described herein with a wax before providing it to the Fischer-Tropsch reactor. Treating the particles with a wax may serve to facilitate handling, transport, and installation of the particles by improving the strength of the particles. The wax may be incorporated into the catalyst by combining the coated or heat-treated fibrous structure with liquefied wax, e.g., through dipping or impregnation, optionally removing excess wax, and allowing the wax remaining on the particles to solidify. Suitable waxes include those which are substantially non-tacky below a temperature of about 40 °C. For more information on this embodiment, reference is made to what is stated in EP 2 000 207.

In a further aspect, a catalytic hydrocracking reaction in which a hydrocarbon feed is contacted under hydrocracking reaction conditions with a catalyst comprising a Group VIII metal component on a coated or heat-treated fibrous substrate as described above is provided.

Suitable conditions for the catalytic hydrocracking are known in the art. Typically, the hydrocracking is effected at a temperature in the range of from about 175 to 400 °C. Typical hydrogen partial pressures applied in the hydrocracking process are in the range of from 10 to 250 bar.

The person skilled in the art will understand that the present invention can be carried out in many various ways without departing from the scope of the appended claims.

**Claims**

1. A method for the manufacture of a coated fibrous structure (100) comprising at least the steps of:

- providing a mass of fibres from a fibre supply dispenser (10, 110);
- separating the mass of fibres into separate fibres (40) ;
- collecting a plurality of the separate fibres (40) in a mould (50, 150) to provide an aggregate comprising the fibres, said mould (50, 150) comprising a liquid permeable base (52, 152);
- contacting at least a part of the aggregate in the mould (50, 150) with a mixture from a mixture supply system (70, 170), said mixture comprising (i) liquid and (ii) carrier material or a precursor of said carrier material to provide a wetted aggregate; and
- removing liquid from the wetted aggregate through the liquid permeable base (52) of the mould (50) to provide a coated fibrous structure (100) comprising the fibres and the carrier material or the precursor of said carrier material deposited thereon.

2. The method according to claim 1 wherein the fibres are selected from the group comprising ceramic fibres, rock wool, glass fibres, metal fibres, metal alloy fibres and combinations thereof.

3. The method according to claim 1 or claim 2, wherein said method further comprises, after the formation of the coated fibrous structure, the step of:

- heating the coated fibrous structure (100) to provide a heat-treated fibrous structure.

4. The method according to claim 3 wherein the contacting and removing liquid steps are repeated at least once after the heating step to one or both of increase the thickness of the carrier material or the precursor thereof deposited on the heat-treated fibrous structure and deposit a different carrier material or a precursor thereof on the heat-treated fibrous structure.

5. The method according to any of the preceding claims wherein the separation step comprises passing the mass of metal fibres through one or both of a sieve (30, 130), preferably a vibrating sieve, and steel brushes.

6. The method according to any of the preceding claims wherein the liquid permeable base (52, 152) of the mould (50, 150) comprises a mesh.

7. The method according to any of the preceding claims further comprising, between the collecting and contacting steps, the step of compressing the aggregate.

8. The method according to claim 7 wherein the compressing step comprises reducing the volume of the aggregate to a compressed state which is at most 90%, more particularly at most 70%, even more particularly at most 50%, of the volume of the aggregate before compression.

9. The method of any of the preceding claims wherein the carrier material is a porous metal oxide or a precursor thereof, preferably selected from one or more of the group comprising zirconia, gallia, ceria titania, silica, alumina, a molecular sieve and their precursors, most preferably titania.

10. The method according to any of the preceding claims wherein the step of removing liquid from the wetted aggregate comprises one or both of (i) passing a gas, preferably an inert gas or air, through the wetted aggregate to blow liquid through the liquid permeable base (52, 152) of the mould (50, 150) and (ii) drawing liquid through the liquid permeable base (52, 152) of the mould (50, 150), said liquid permeable base (52, 152) having an upper surface adjacent to the wetted aggregate and an opposite lower surface, by reducing the pressure at the lower surface of the liquid permeable base (52, 152) compared to the pressure of the upper surface.

11. The method according to any of the preceding claims wherein the mould (50, 150) is present on a conveyor, such as an endless belt (60), which moves the mould (50, 150) into position for at least each of the collecting, contacting and liquid removal steps.

12. The method according to any of claims 1 to 10 wherein, for at least each of the providing and contacting steps, the mould (150) remains substantially stationary and the fibre dispenser (110) and mixture supply system (170) are moved into position in order to supply fibres and mixture respectively to the mould (150), for instance by a robotic arm (200).

13. A catalyst prepared according to the method of any of the preceding claims wherein the coated fibrous structure (100) further comprises a catalytically active metal or a precursor thereof.

14. Use of a catalyst according to claim 13 as a Fischer-Tropsch catalyst.

15. A fischer-tropsch process comprising at least the steps of:

- providing a Fischer-Tropsch reactor with a catalyst according to claim 13;
- supplying syngas to the catalyst in the reactor; and
- removing Fischer-Tropsch product from the reactor.

*Fig. 1*

EP 2 463 027 A1

*Fig. 2*

Europäisches
Patentamt

European
Patent Office

Office européen
des brevets

# EUROPEAN SEARCH REPORT

**Application Number**

EP 10 19 4094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 338 592 A1 (SHELL INT RESEARCH [NL]) 29 June 2011 (2011-06-29) * paragraphs [0007] - [0009], [0025] - [0029], [0036] - [0041], [0045], [0050] - [0054], [0059], [0067] - [0068], [0007] - [0080] * ----- | 13-15 | INV. B01J35/06 B01J23/75 B01J37/00 B01J37/02 C04B20/10 C04B30/00 |
| E | WO 2011/073237 A1 (SHELL INT RESEARCH [NL]; DEKKER DESMOND MARINUS CORNELIS [NL]; NIESEN) 23 June 2011 (2011-06-23) * the whole document * ----- | 13-15 | |
| X | WO 00/78692 A1 (ABB LUMMUS GLOBAL INC [US]) 28 December 2000 (2000-12-28) | 1-3,6,13 | |
| A | * abstract * * page 5, line 17 - page 7, line 20 * * page 16, line 8 - page 17, line 29 * ----- | 4,5, 7-12,14, 15 | |
| A | WO 02/07872 A1 (SHELL INT RESEARCH [NL]; GIMPEL FREDERIK WILLEM HENDRIK [NL]; HARDEVEL) 31 January 2002 (2002-01-31) * page 4, line 17 - line 23 * * page 6, line 15 - line 34 * * claims; examples * ----- | 1-15 | **TECHNICAL FIELDS SEARCHED (IPC)** B01J C04B |

The present search report has been drawn up for all claims

| Place of search | Date of completion of the search | Examiner |
|---|---|---|
| Munich | 15 July 2011 | Keipert, Olaf |

EPO FORM 1503 03.82 (P04C01)

**ANNEX TO THE EUROPEAN SEARCH REPORT
ON EUROPEAN PATENT APPLICATION NO.**

EP 10 19 4094

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | | | Publication date | Patent family member(s) | | Publication date |
|---|---|---|---|---|---|---|
| EP 2338592 | A1 | | 29-06-2011 | NONE | | |
| WO 2011073237 | A1 | | 23-06-2011 | US 2011152063 A1 | | 23-06-2011 |
| WO 0078692 | A1 | | 28-12-2000 | AU 5757800 A | | 09-01-2001 |
| | | | | US 6365092 B1 | | 02-04-2002 |
| WO 0207872 | A1 | | 31-01-2002 | AR 029961 A1 | | 23-07-2003 |
| | | | | AU 8760301 A | | 05-02-2002 |
| | | | | AU 2001287603 B2 | | 25-11-2004 |
| | | | | CA 2416459 A1 | | 31-01-2002 |
| | | | | EP 1303348 A1 | | 23-04-2003 |
| | | | | MX PA03000662 A | | 15-10-2003 |
| | | | | NO 20030371 A | | 20-03-2003 |
| | | | | NZ 523660 A | | 30-07-2004 |
| | | | | ZA 200300334 A | | 31-03-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006037776 A
- US 5027886 A
- DE 19711764
- DE 10000097
- EP 2000207 A